# EUROPEAN PATENT APPLICATION

(11) **EP 1 924 015 A2**
(43) Date of publication of application: **21.05.2008**
(21) Application number: 07114258.2
(22) Date of filing: 13.08.2007
(51) Int. Cl.: H04H 20/30

(54) **Recording apparatus and method**

(30) Priority: 17.11.2006 KR 20060114025
(71) Applicant: Samsung Electronics Co., Ltd., Suwon-si, Gyeonggi-do 442-742 (KR)
(72) Inventor: Kim, Jung-a, Gyeonggi-do (KR); Bak, Bong-gil, Gyeonggi-do (KR)
(74) Representative: Walaski, Jan Filip

(57) **Abstract**

A method of controlling a temporary recording based on a variable temporary record interval, and a broadcast receiving device adopting the same, are provided. The broadcast receiving device includes a broadcast receiving unit which receives a broadcast program; a storage unit which temporarily records the broadcast program being received through the broadcast receiving unit; and a control unit which variably determines a temporary record interval with reference to additional information of the broadcast program currently received through the broadcast receiving unit, and controls the storage unit so that a temporary recording is performed during the determined temporary record interval. Accordingly, even if the currently viewed broadcast program has a long running time, the user can view again the previously viewed part of the broadcast program.

## Description

The present invention relates to controlling recording of a broadcast program, and more particularly, controlling a temporary recording of a broadcast program, in which a time shift function is provided.

A time shift function is a function that enables a user to view a broadcast program that was broadcast at a time previous to the current time, by reproducing the broadcast program that was previously broadcast.

Such a time shift function can be accomplished by securing a predetermined quantity of the broadcast program that was previously broadcast (i.e., the broadcast program that was previously broadcast for a predetermined time) through temporarily recording the broadcast program for a predetermined time. The temporary record interval, which corresponds to the quantity of the broadcast program that has been temporarily recorded, is an index representing the time for which the previously broadcast program is secured.

Although the temporary record interval may be determined in response to a particular need, the temporary record interval is generally limited by the capacity of a recording medium. In addition, the temporary record interval is not variable, but is fixed.

It is assumed that the temporary record interval is fixed to one hour and a broadcast program having a running time of two hours is being viewed. In this case, since the temporary record interval is one hour, the first half part of the broadcast program temporarily recorded is successively deleted as the latter half part of the broadcast program is viewed.

Accordingly, although the broadcasting of the program has not yet been completed, it becomes impossible for the user to view the first half part of the broadcast program again, and this may cause the user inconvenience.

According to an aspect of the present invention, there is provided broadcast receiving device comprising: a broadcast receiving unit which receives a broadcast program, a storage unit which temporarily records the broadcast program being received through the broadcast receiving unit, and a control unit which variably determines a temporary record interval with reference to additional information of the broadcast program currently received through the broadcast receiving unit, and controls the storage unit so that a temporary recording is performed within the determined temporary record interval.

In the temporary record interval, the storage unit may perform the temporary recording from the current time point.

The control unit may calculate a remaining broadcast time of the current broadcast program with reference to the additional information of the currently received broadcast program, and determines the temporary record interval to be longer than the calculated remaining broadcast time of the current broadcast program. The control unit determines the remaining broadcast time of the current program to be the temporary record interval.

The control unit may determine the remaining broadcast time of the current program by subtracting an elapsed broadcast time from the whole broadcast time of the current program.

The control unit may determine the remaining broadcast time of the current program by subtracting the current time from a broadcast end time of the current program.

The control unit may determine the temporary record interval based on the whole broadcast time of the currently received broadcast program.

The storage unit may temporarily record the broadcast program to cause the current viewing time to be changeable.

The control unit may variably determine the temporary record interval with reference to electronic program guide (EPG) information of the currently received broadcast program recorded in the additional information.

According to another aspect of the present invention, there is provided a method of controlling a temporary recording, comprising: variably determining a temporary record interval with reference to additional information of a broadcast program currently received, and controlling such that the temporary recording is performed within the determined temporary record interval.

In the temporary record interval, the storage unit may perform the temporary recording from the current time point.

The determining may comprise calculating a remaining broadcast time of the current broadcast program with reference to the additional information of the currently received broadcast program, and determining the temporary record interval to be longer than the calculated remaining broadcast time of the current broadcast program.

The determining may comprise determining the remaining broadcast time of the current program to be the temporary record interval.

The determining may comprise determining the remaining broadcast time of the current program by subtracting an elapsed broadcast time from the whole broadcast time of the current program.

The determining may comprise determining the time obtained by subtracting the current time from a broadcast end time of the current program as the remaining broadcast time of the current program.

The determining may comprise determining the temporary record interval based on the whole broadcast time of the currently received broadcast program.

The controlling for temporary recording may comprise temporarily recording the broadcast program to cause the current viewing time to be changeable.

The determining may comprise variably determining the temporary record interval with reference to electronic program guide (EPG) information of the currently received broadcast program recorded in the additional information.

Embodiments of the present invention will now be described by way of example only, with reference to the accompanying drawings, in which:
Figure 1 is a block diagram illustrating the construction of a broadcast receiving device according to an embodiment of the present invention;
Figure 2 is a flowchart illustrating a method of controlling a temporary recording based on additional information of a broadcast program according to an embodiment of the present invention;
Figure 3 is a block diagram illustrating the construction of a broadcast receiving device according to another embodiment of the present invention; and
Figure 4 is a flowchart illustrating a method of controlling a temporary recording based on additional information of a broadcast program according to another embodiment of the present invention.

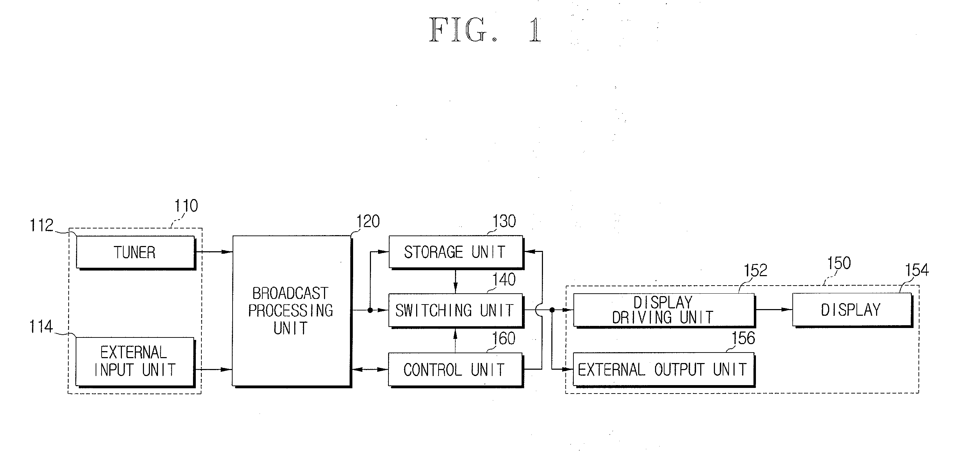

Figure 1 is a block diagram illustrating the construction of a broadcast receiving device according to an embodiment of the present invention.

The broadcast receiving device according to an embodiment of the present invention provides a time shift function. This time shift function is a function that enables a user to view a broadcast program that was broadcast at a time previous to the current time by reproducing the broadcast program that was broadcast at the previous time. In order to carry out the time shift function, a broadcast program is temporarily recorded for a determined time. According to embodiments of the present invention, the broadcast receiving device variably determines a temporary record interval based on additional information of the broadcast program that is currently being broadcast.

As shown in Figure 1, the broadcast receiving device according to an embodiment of the present invention comprises a broadcast receiving unit 110, a broadcast processing unit 120, a storage unit 130, a switching unit 140, a broadcast output unit 150, and a control unit 160.

The broadcast receiving unit 110 receives a broadcast program from an external source, and is provided with a tuner 112 and an external input unit 114. The tuner 112 selects one of broadcasting signals being received in a wired or a wireless manner. The external input unit 114 receives a broadcasting signal from an external device (e.g., an external set-top box) connected thereto.

The broadcast processing unit 120 selectively receives the broadcasting signal from the tuner 112 and the external input unit 114, and performs a broadcasting signal process such as decoding, scaling, and so forth, with respect to the received broadcasting signal.

In addition, the broadcast processing unit 120 extracts additional information from the applied broadcasting signal and transfers the extracted additional information to the control unit 160, which is described in greater detail below. This additional information includes, for instance, electronic program guide (EPG) information. The storage unit 130 records the broadcast program, which is outputted from the broadcast processing unit 120, on a recording medium. A magnetic recording medium, such as a hard disk drive (HDD), or a semiconductor recording medium, such as a memory card or a flash memory, can be used as the recording medium. Of course, an optical recording medium such as a digital versatile disk (DVD) can also be used as the recording medium.

On the recording medium, a broadcast is recorded or temporarily recorded. The recording of the broadcast program is performed according to a user's record command, and the temporary recording of the broadcast program is performed for a determined time for time-shift reproduction. In other words, the temporary recording is performed so as to enable a user to change the viewing time of the broadcast program.

The storage unit 130 reproduces the broadcast program that has been recorded or temporarily recorded on the recording medium.

The switching unit 140 performs a switching operation so that the broadcast program outputted from the broadcast processing unit 120, or the broadcast program reproduced from the storage unit 130, is selectively outputted to the broadcast output unit 150. The switching unit 140 switches according to the control of the control unit 160, which will be explained below.

Specifically, if the current viewing time point corresponds to the current broadcast time point (i.e., if the user is viewing the currently received broadcast program), then the switching unit 140 performs a switching operation so that the broadcast program output from the broadcast processing unit 120 is input to the broadcast output unit 150. By contrast, if the current viewing time point corresponds to a previous broadcast time point (i.e., if the user is viewing a previously received broadcast program), then the switching unit 140 performs a switching operation so that the temporarily stored broadcast program is reproduced from the storage unit 130 and is output to the broadcast output unit 150.

The broadcast output unit 150 outputs the broadcast program from the switching unit 140 to an internal display or an external display. Specifically, i) the output of the broadcast program to the internal display is performed through a process in which a display driving unit 152 displays the broadcast program on the display 154, and ii) the output of the broadcast program to the external display is performed through a process in which the external output unit 156 transfers the broadcast program to the external display, such as an external television receiver.

The control unit 160 controls the switching operation of the switching unit 140 in accordance with the current viewing time point. Also, the control unit 160 variably determines the temporary record interval for which the storage unit 130 is to perform the temporary recording from the current time point, with reference to the additional information of the broadcast program that is currently being received, and controls the temporary recording operation of the storage unit 130 in accordance with the determined temporary record interval.

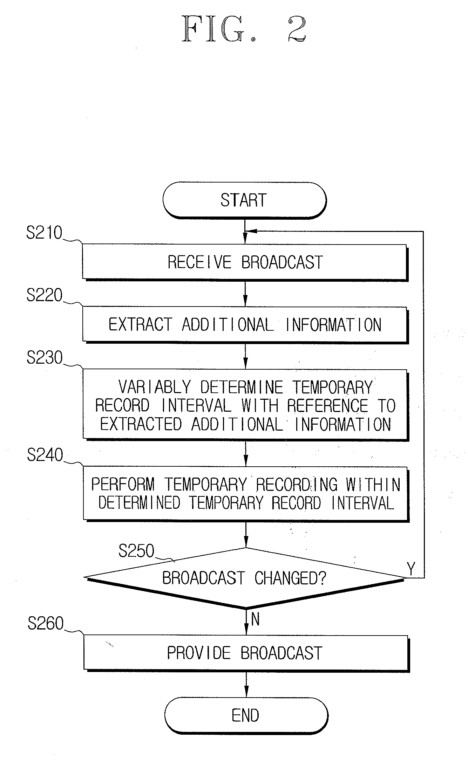

Hereinafter, the processes of variably determining the temporary record interval and of controlling the temporary recording operation in accordance with the determined temporary record interval, will be explained in greater detail with reference to Figure 2.

As illustrated in Figure 2, the broadcast receiving unit 110 receives the broadcast program (S210), and the broadcast processing unit 120 extracts additional information from the received broadcast program (S220). The extracted additional information is transferred to the control unit 160.

The control unit 160 variably determines the length of the temporary record interval with reference to the extracted additional information (S230). The "temporary record interval" refers to a time period during which the storage unit 130 starts temporary recording from the current time point and continues recording.

In determining the temporary record interval, the control unit 160 can, for example, refer to the EPG information on the currently received broadcast program (hereinafter referred to as "current program") included in the additional information. Specifically, the control unit 160 can refer to the whole broadcast time of the current program, a broadcasting end time, and so forth, that is recorded in the EPG information.

In an embodiment, in order to determine the temporary record interval, the control unit 160 calculates the remaining broadcast time of the current program. For example, the control unit 160 can calculate the remaining broadcast time by subtracting the elapsed broadcast time from the whole broadcast time of the current program. By way of illustration, if it is assumed that the whole broadcast time of the current program is two hours and the elapsed broadcast time is 30 minutes, then the remaining broadcast time of the current program is one hour and thirty minutes.

In another embodiment, the control unit 160 calculates the time obtained by subtracting the current time from the broadcast end time of the current program as the remaining broadcast time of the current program. By way of illustration, if it is assumed that the broadcast end time of the current program is 8:00 PM and the present time is 6:30 PM, then the remaining broadcast time of the current program is one hour and thirty minutes.

When the calculation of the remaining broadcast time of the current program is completed, the control unit 160 can determine the calculated remaining broadcast time of the current program as the temporary record interval.

Although the temporary record interval as determined above is the remaining broadcast time, it is also possible to add a reserved time to the temporary record interval to determine the temporary record interval. That is, the control unit 160 may determine the time obtained by adding a reserved time to the remaining broadcast time of the current program as the temporary record interval. Accordingly, the temporary record interval exceeds the remaining broadcast time of the current program. For example, in the case where the remaining broadcast time of the current program is one hour and thirty minutes, the temporary record interval may be determined to be one hour and forty minutes.

As an alternative scheme for securing the reserved time in the temporary record interval, the control unit 160 may determine the whole broadcast time of the current program as the temporary record interval. Since the whole broadcast time of the current program is more than the remaining broadcast time of the current program, the reserved time can be secured in the temporary record interval by determining the whole broadcast time of the current program as the temporary record interval. For example, although the remaining broadcast time of the current program is one hour and thirty minutes, the whole broadcast time of two hours may be determined as the temporary record interval.

Then, the control unit controls the storage unit 130 so that the temporary recording is performed within the determined temporary record interval (S240).

If the broadcast program has not been changed (S250-N), the broadcast receiving device provides the broadcast program to the user (S260). Here, the provided broadcast program may include the broadcast program of the current time or the broadcast program of a previous time (i.e., a time-shifted broadcast program).

By contrast, if the broadcast program has been changed (S250-Y), the broadcast receiving device performs the above-described process again, starting from the step (S210). The broadcast program is changed when the user changes the broadcasting channel, or when the broadcast program provided from the currently selected broadcasting channel ends and the following broadcast program starts.

The process of controlling the temporary recording operation in accordance with the variably determined temporary record interval according to embodiments of the present invention has been described.

In the embodiments of the present invention described above, the temporary record interval is variably determined with reference to EPG information. However, this is merely exemplary, and it is also possible to refer to other information included in the additional information of the broadcast program.

Also, the additional information of the broadcast program is not necessarily included in the broadcasting signal. Accordingly, in another embodiment, the additional information of the broadcast program is provided through another channel that is not the channel through which the broadcast program is provided.

On the other hand, if there is not enough recording space as is necessary to record the determined temporary record interval in the recording medium, then this problem can be solved by 1) deleting the broadcast program recorded in the recording medium, or 2) re-determining the temporary record interval to meet the recording space limitations.

In deleting a broadcast program recorded in the recording medium, it is desirable to preferentially delete the temporarily recorded broadcast programs. If there is not enough recording space secured in the recording medium as is necessary to record the temporary record interval, in spite of the deletion of the temporarily recorded broadcast programs, it may be possible to delete a recorded broadcast program through a user's approval procedure. In addition, it is not required for the broadcast receiving device according to an embodiment of the present invention to be provided with all the blocks illustrated in Figure 1, and unnecessary blocks may be omitted. For example, in the case where the broadcast receiving device is a set-top box, it becomes possible to omit the display driving unit 152 and the display 154.

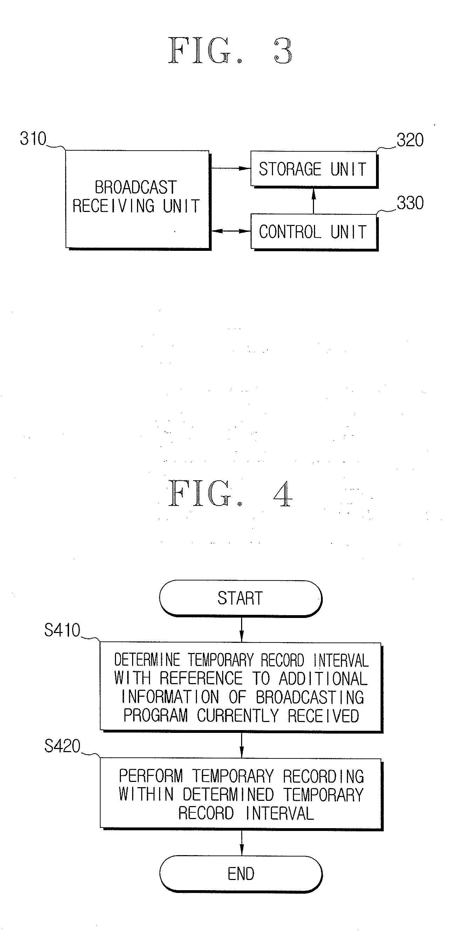

Hereinafter, the broadcast receiving device according to another embodiment of the present invention will be described with reference to Figures 3 and 4.

As illustrated in Figure 3, the broadcast receiving device according to another embodiment of the present invention comprises a broadcast receiving unit 310, a storage unit 320, and a control unit 330. The broadcast receiving unit 310 receives a broadcast program, and the storage unit 320 temporarily records the broadcast program received through the broadcast receiving unit 310.

The control unit 330 variably determines a temporary record interval with reference to additional information of the broadcast program that is currently received through the broadcast receiving unit 310. Then, the control unit 330 controls the storage unit 320 so that the temporary recording is performed within the determined temporary record interval.

According to a method of controlling a temporary recording as illustrated in Figure 4, the control unit 330 variably determines the temporary record interval with reference to the additional information of the broadcast program that is currently received through the broadcast receiving unit 310 (S410), and controls the storage unit 320 so that the temporary recording is performed within the determined temporary record interval (S420).

As described above, according to this embodiment of the present invention, the temporary record interval is variably determined with reference to the additional information of the broadcast program, such as the broadcast time, and the temporary recording operation can be controlled based on the determined temporary record interval. Accordingly, even if the currently viewed broadcast program has a long running time, the user can view again the previously viewed part of the broadcast program.

In addition, since the temporary record interval is not directly calculated by the user, but is automatically determined through the additional information of the broadcast program, the user's convenience can be achieved.

The foregoing exemplary embodiments and advantages are merely exemplary and are not to be construed as limiting the scope of the present invention. The present teachings can be readily applied to other types of apparatuses. Also, the description of the exemplary embodiments of the present invention is intended to be illustrative, and not to limit the scope of the claims as defined by the appended claims, and many alternatives, modifications, and variations will be apparent to those skilled in the art.

## Claims

1. A broadcast receiving device comprising:
a broadcast receiving unit for receiving a broadcast program;
a storage unit for temporarily recording the broadcast program; and
a control unit arranged to determine a record interval with reference to additional information relating to the broadcast program, and to control the storage unit so that a temporary recording is performed during the determined record interval,
wherein the record interval is variable.

2. The broadcast receiving device of claim 1, wherein the storage unit is arranged to perform the temporary recording beginning with a current time point.

3. The broadcast receiving device of claim 1 or claim 2, wherein the control unit is arranged to calculate a remaining broadcast time of the broadcast program with reference to the additional information of the broadcast program, and to determine the record interval to be longer than the calculated remaining broadcast time of the broadcast program.

4. The broadcast receiving device of claim 1 or claim 2, wherein the control unit is arranged to calculate a remaining broadcast time of the broadcast program with reference to the additional information of the broadcast program, and to determine the record interval to be the remaining broadcast time of the broadcast program.

5. The broadcast receiving device of claim 4, wherein the control unit is arranged to calculate the remaining broadcast time of the broadcast program by subtracting an elapsed broadcast time of the broadcast program from a whole broadcast time of the broadcast program.

6. The broadcast receiving device of claim 4, wherein the control unit is arranged to calculate the remaining broadcast time of the broadcast program by subtracting a current time from a broadcast end time of the broadcast program.

7. The broadcast receiving device of claim 1 or claim 2, wherein the control unit is arranged to determine the record interval using a whole broadcast time of the broadcast program.

8. The broadcast receiving device of any one of the preceding claims, wherein the storage unit is arranged to temporarily record the broadcast program so as to change the time at which the broadcast program is viewed.

9. The broadcast receiving device of claim 1, wherein the additional information of the broadcast program comprises electronic program guide (EPG) information of the broadcast program, and wherein the control unit determines the temporary record interval with reference to the EPG information.

10. A method of controlling a temporary recording of a broadcast program, the method comprising:
determining a record interval with reference to additional information relating to a received broadcast program; and
performing a temporary recording of the broadcast program during the determined record interval,
wherein the record interval is variable.

11. The method of claim 10, wherein a storage unit performs the temporary recording beginning with a current time point.

12. The method of claim 10 or claim 11, further comprising:
calculating a remaining broadcast time of the broadcast program with reference to the additional information of the broadcast program; and
determining the record interval to be longer than the calculated remaining broadcast time of the broadcast program.

13. The method of claim 10 or claim 11, further comprising:
calculating a remaining broadcast time of the broadcast program with reference to the additional information of the broadcast program; and
determining the record interval to be the remaining broadcast time of the broadcast program.

14. The method of claim 12 or claim 13, further comprising calculating the remaining broadcast time of the broadcast program by subtracting an elapsed broadcast time of the broadcast program from a whole broadcast time of the broadcast program.

15. The method of claim 12 or claim 13, further comprising calculating the remaining broadcast time of the broadcast program by subtracting a current time from a broadcast end time of the broadcast program.

16. The method of claim 10 or claim 11, further comprising determining the record interval using a whole broadcast time of the broadcast program.

17. The method of any one of claims 10 to 16, further comprising temporarily recording the broadcast program so as to change the time at which the broadcast program is viewed.

18. The method of any one of claims 10 to 17, further comprising determining the record interval with reference to electronic program guide (EPG) information of the broadcast program which is recorded in the additional information.
